# NEUE EUROPÄISCHE PATENTSCHRIFT

(11) **EP 3 517 641 B2**
(45) Veröffentlichungstag und Bekanntmachung des Hinweises auf die Entscheidung über den Einspruch: **29.03.2023**
(45) Hinweis auf die Patenterteilung: 25.03.2020
(21) Anmeldenummer: 18170117.8
(22) Anmeldetag: 30.04.2018
(51) Int. Cl.: C22B 1/06, C22B 3/26, C22B 7/00, C22B 3/00, C22B 26/12, C22B 47/00

(54) **VERFAHREN ZUM VERWERTEN VON LITHIUM-BATTERIEN**
METHOD FOR THE UTILIZATION OF LITHIUM BATTERIES
PROCÉDÉ DE VALORISATION DE BATTERIES AU LITHIUM

(30) Priorität: 30.01.2018 DE 102018102026
(43) Veröffentlichungstag der Anmeldung: 31.07.2019
(73) Patentinhaber: Duesenfeld GmbH, 38176 Wendeburg (DE)
(72) Erfinder: Hanisch, Christian, 38118 Braunschweig (DE); Elwert, Tobias, 38678 Clausthal-Zellerfeld (DE); Brückner, Lisa, 38678 Clausthal-Zellerfeld (DE)
(74) Vertreter: Gramm, Lins & Partner Patent- und Rechtsanwälte PartGmbB

(56) Entgegenhaltungen:
- WO-A1-2011/082444
- CN-A- 101 519 726
- CN-A- 106 505 270
- CN-A- 106 755 967
- DE-A1- 3 622 105
- DE-A1-102015 207 843
- US-A1- 2017 077 564

## Beschreibung

Die Erfindung betrifft ein Verfahren zum Verwerten von Lithium-Batterien. Gemäß eines zweiten Aspekts betrifft die Erfindung eine Wiedergewinnungsanlage zum Verarbeiten von Lithium-Batterien.

Lithium-Batterien sind Batterien, bei denen die elektrische Energie durch elektrochemische Reaktion gespeichert wird, die auf Lithium beruht. Lithium-Batterien werden in weitem Umfang eingesetzt. Das Recycling von Lithium-Batterien bereitet noch Probleme. So ist es bislang nicht möglich, den Graphit, der in Elektroden enthalten ist, in einer solchen Qualität wiederzugewinnen, dass er erneut bei der Herstellung von Lithium-Batterien einsetzbar ist. Auch die Rückgewinnung des Lithiums bereitet Probleme. Die Rückgewinnung von Kobalt, Nickel, Mangan, die in Lithium-Batterien enthalten sein können, ist zudem in der Regel nur in einer solchen Reinheit möglich, dass es einen Einsatz in neuen Lithium-Batterien wirtschaftlich nicht möglich macht. Ganzheitlich betrachtet liegt die stoffliche Recycling-Effizienz bekannter Wiederverwertungsverfahren hinsichtlich der Betrachtungsebene der Batteriezelle unter 50 Gew.-%.

Aus der US 2004/0028 585 A1 ist ein Verfahren zum Wiedergewinnen von Vanadium aus Lithiummetall-Polymer-Batterien bekannt. Dabei wird gemäß einer Variante das Zerkleinerungsgut mit 30 prozentiger, verdünnter Schwefelsäure versetzt. Aus der entstehenden wasserhaltigen Lösung wird danach das Vanadium als Vanadiumpentoxid gewonnen. Ein derartiges Verfahren ist nur dann sinnvoll einsetzbar, wenn der Vanadiumgehalt im Zerkleinerungsgut hinreichend hoch ist. Das ist aber beispielsweise in den häufig verwendeten Lithium-Ionen-Batterien nicht der Fall. Zudem können weitere metallische Bestandteile, beispielsweise Kobalt, Nickel und Mangan nur schlecht extrahiert werden. Vom Einsatz konzentrierter Schwefelsäure wird unter anderem aus Sicherheitsgründen abgeraten.

Aus der US 2017/0077564 A1 ist ein Verfahren zum Wiederverwerten von Lithiumlonen-Batterien bekannt, bei dem das Zerkleinerungsmaterial mit verdünnter Schwefelsäure und einer wässrigen Wasserstoffperoxid-Lösung gelaugt wird. Nachteilig an einem solchen Verfahren ist, dass es aufwändig ist, damit höchste Wiedergewinnungsraten zu erreichen.

Der Artikel "Acid leaching of mixed spent Li-ion batteries" von Nayl et al, Arabian Journal of Chemistry, 2017, 10, S3632-S3639 beschreibt ebenfalls ein Laugungsverfahren von Lithium-Batterien, bei dem verdünnte Schwefelsäure und Wasserstoffperoxid verwendet werden. Es wird gefunden, dass der Laugungsgrad mit zunehmender Konzentration der Schwefelsäure zunächst zunimmt und ab 3 M abfällt. Die höchste untersuchte Konzentration sind 4 M.

Aus der DE 36 22 105 A1 ist eine Vorrichtung zum Gewinnen von Lithiumcarbonat aus Erz bekannt, bei der das Erz zunächst schockartig in einer Wirbelschicht auf zumindest 800 °C erhitzt und dann mittels Schwefelsäure aufgeschlossen wird. Die verwendeten Erze enthalten in der Regel keine Fluoride, sodass bei der der Wirbelschichtverbrennung keine gasförmigen Fluorverbindungen entstehen können. Die Beschickung dieser Anlage mit zerkleinerten Lithium-Akkus würde daher potentiell gefährliche Gase freisetzen.

Aus der CN 106 755 967 A ist ein weiteres Verfahren zum Aufschließen von Lepidolith mit Schwefelsäure in einer Konzentration von 70 bis 96 Gew.-% bei Temperaturen zwischen 1600 und 1900 °C bekannt. Ein derartiges Verfahren hat einen sehr hohen Energieverbrauch.

Die CN 106 505 270 A beschreibt ein Verfahren zum Rückgewinnen von Metallen aus Lithium-Altbatterien. Gemäß dem Verfahren wird das Zerkleinerungsmaterial mit N,N-Dimethylformamid und/oder N-Methylpyrrolidon behandelt. Danach wird Lithiumkobaltoxid wird mittels einer Mischung aus Schwefelsäure und Wasserstoffperoxid gelöst, sodass Kobalt nach Fällen mittels NaOH oder KOH zurückgewonnen werden kann. Durch Kalzinieren wird daraus Kobaltoxid gewonnen.

Aus dem Artikel "Roasting of failed lithium ion batteries and leaching of valuable metals" von Jie Xiaowu et al aus The Chinese Journal of Process Engineering, Vol. 11, No. 2, Seite 249-253 ist bekannt, Lithium-Batterien zunächst auf 600°C zu erhitzen, um organisches Material des Binders und anderes organisches Material zu entfernen. Dieser Binder besteht zumeist aus Polyvinylidenfluorid. Das veraschte Material enthält kein Fluor und wird gesiebt. Die verbleibende Aluminiumfolie und der Siebrest werden mit konzentrierter Schwefelsäure aufgeschlossen.

Die CN 101 519 726 A beschreibt ein ähnliches Verfahren, bei dem die das organische Bindemittel auf dem organischen Separatormaterial und dem Elektrodenmaterial bei 500-850°C durch entfernt werden. Dabei werden auch Fluorverbindungen oxidiert und so entfernt. Zudem werden einige Metalle, wie Kupfer, oxidiert, und andere Bestandteile Lithium-Ionen-Batterie werden spröde und können leicht zerkleinert werden.

In dem Paper "Acid baking of spent lithium ion batteries for selective recovery of major metals. A two-step process" von Meshram et al, Journal of industrial and Engineering Chemistry 43 (2016) 117-126, wird ein Verfahren beschrieben, wie Kathodenmaterial mittels Schwefelsäure aufgeschlossen werden kann. Das Kathodenmaterial wird dadurch gewonnen, dass die Batterie manuell demontiert und die Kathode entnommen wird. Danach wird die Aluminiumfolie der Kathode auf 250-300°C erhitzt, um das darauf angeordnete Kathodenmaterial abzulösen.

Die CN 107 352 524 A beschreibt ein weiteres Verfahren, bei dem Kathodenmaterial behandelt wird. Dieses wird zunächst bei 680°C oxidiert, um organisches Material und den Graphit zu entfernen. Danach wird konzentrierte Schwefelsäure zugegeben, um das veraschte Material aufzuschließen.

Die EP 3 202 928 A1 lehrt die Verwendung einer sauren Lösung, beispielsweise verdünnter Schwefelsäure. Aus der erhaltenen Lösung werden die entstehenden gelösten Salze per Solventextraktion entfernt.

Der Erfindung liegt die Aufgabe zu Grunde, die Wiederverwertung von Lithium-Batterien zu verbessern.

Die Erfindung löst das Problem durch Verfahren gemäß der Verfahrensansprüche 1 und 10.

Gemäß eines zweiten Aspekts löst die Erfindung das Problem durch eine Wiedergewinnungsanlage mit den Merkmalen des unabhängigen Anspruchs 11.

Die Abführvorrichtung ist insbesondere so ausgebildet, dass sie fluorwasserstoffdicht ist. In anderen Worten kann Fluorwasserstoff nicht in die Umgebung entweichen.

Vorteilhaft an der Erfindung ist, dass beim Aufschließen des Zerkleinerungsguts mit Schwefelsäure, bei der es sich um konzentrierte Schwefelsäure handelt, Fluor, das im Zerkleinerungsgut vorhanden ist, vollständig austreibbar ist. Fluorverbindungen können Fluorwasserstoff bilden, der unter Arbeitssicherheitsgesichtspunkten hochgradig problematisch ist. Zudem ist Fluorwasserstoff stark korrosiv. Durch das Aufschließen des Zerkleinerungsguts mit Schwefelsäure wird das Fluor aus dem Zerkleinerungsgut entfernt, sodass die nachfolgenden Prozessschritte unter geringeren Sicherheitsvorkehrungen, mit geringerem Materialverschleiß durchgeführt werden können. Manche Trennverfahren (bspw. Membrantrennverfahren, Elektrodialyse mit bipolarer Membran) können in Flüssigkeiten mit hohen Fluoridgehalten gar nicht durchgeführt werden, werden durch diese Vorbereitung jedoch ermöglicht. Zudem können keine Verunreinigungen durch fluorhaltige Substanzen entstehen, sodass die weiteren Bestandteile des Zerkleinerungsguts in der Regel mit einer hohen Reinheit zurückgewinnbar sind.

Vorteilhaft ist zudem, dass der Batteriegraphit häufig in so hoher Reinheit wiedergewonnen werden kann, dass er für die Herstellung neuer Elektroden einsetzbar ist.

Günstig ist es zudem, dass das Verfahren in der Regel so durchgeführt werden kann, dass das Lithium in einer hinreichend hohen Reinheit zurückgewonnen wird, sodass es für die Herstellung neuer Lithium-Batterien tauglich ist. Auch Kobalt, Nickel, Mangan und/oder Titan können, soweit im Zerkleinerungsgut enthalten, häufig in einer hohen Reinheit wiedergewonnen werden, die einen erneuten Einsatz in einer Batterie ermöglichen.

Vorteilhaft ist insbesondere, dass eine Recyclingeffizienz bezogen auf eine Batteriezelle von über 50 Gew.-% in den meisten Fällen erreichbar ist.

Es sei darauf hingewiesen, dass die oben genannten Vorteile eintreten können, nicht aber eintreten müssen.

Bekannte Verfahren fokussieren auf die Rückgewinnung von Kobalt und Nickel, da diese den höchsten Materialwert in gebrauchten Lithium-Batterien darstellen. Dass andere Komponenten gebrauchter Lithium-Batterien, beispielsweise der Graphit und/oder das Lithium nicht wiedergewonnen werden können, wird in Kauf genommen. Auch die Rückgewinnung von Fluor steht bei bekannten Verfahren nicht im Vordergrund, da der Wiederverkaufswert vergleichsweise gering ist.

Besonders günstig ist es, dass das erfindungsgemäße Verfahren in den meisten Fällen so ausgestaltet werden kann, dass es einen im Gegensatz zu pyrometallurgischen Verfahren eindeutig geringeren Energiebedarf hat. Insbesondere umfasst das Verfahren gemäß einer bevorzugten Ausführungsform keinen pyrometallurgischen Verfahrensschritt.

Aus der DE 10 2015 207 843 A1 ist bekannt, dass es vorteilhaft ist, die Batterien nach dem Zerkleinern bei niedriger Temperatur zu trocknen, um zu verhindern, dass fluororganische Substanzen gebildet werden können. Bei diesem Trocknen werden die organischen Carbonate, die in Elektrolyten vorhanden sind, abgezogen. Die Fluorverbindungen verbleiben daher im Zerkleinerungsgut. Gemäß einer bevorzugten Ausführungsform wird das Aufschließen damit an Zerkleinerungsgut durchgeführt, das zumindest eine Fluorverbindung enthält.

Im Rahmen der vorliegenden Beschreibung wird unter einem Verfahren zum Verwerten von Lithium-Batterien insbesondere ein Verfahren verstanden, bei dem metallische Bestandteile der Lithium-Batterien wiedergewonnen werden. In diesem Sinne ist das erfindungsgemäße Verfahren auch ein Verfahren zum Extrahieren von metallischen Bestandteilen aus Lithium-Batterien. Die metallischen Bestandteile sind beispielsweise Lithium und/oder Nebengruppenmetalle, insbesondere Metalle der sechsten, siebten und achten Nebengruppe. Die Nebengruppenmetalle sind vorzugsweise Mangan, und/oder Kobalt und/oder Nickel. Günstig ist es zudem, wenn Kupfer und/oder Titan wiedergewonnen wird.

Im Rahmen der vorliegenden Beschreibung wird unter einer Lithium-Batterie insbesondere ein Akkumulator verstanden, bei dem die elektrochemische Reaktion Lithium und/oder Lithium-Ionen und/oder eine Lithium-Verbindung involviert. Eine Batterie enthält zumindest galvanische Elemente.

Vorzugsweise sind die Lithium- Batterien zumindest teilweise Lithium-Ionen-Batterien. Besonders bevorzugt enthält das Zerkleinerungsgut zu zumindest 40 Gewichtsprozent, insbesondere zumindest 60 Gewichtsprozent, Lithium-Ionen-Batterien. Lithium-lonen-Batterien enthalten flüssige, fluorhaltige Elektrolyte, die das Verwerten der Lithium-Batterien deutlich erschweren.

Vorzugsweise ist der Gehalt an Fluor im Zerkleinerungsgut kleiner als 7 Gewichtsprozent, insbesondere kleiner als 5 Gewichtsprozent.

Vorzugsweise beträgt der Gehalt an Fluor im Zerkleinerungsgut zumindest 1 Gewichtsprozent.

Unter einer Wiedergewinnungsanlage wird insbesondere eine Vorrichtung verstanden, mittels der 1, 2, 3 oder mehr metallische Bestandteile von Lithium-Batterien von anderen Komponenten der Lithiumbatterie getrennt wird bzw. werden, sodass eine Weiterverarbeitung möglich ist.

Wenn in der folgenden Beschreibung Temperaturen angegeben sind, so beziehen sich diese stets auf die mittlere Temperatur im entsprechenden Objekt. Beispielsweise wird unter dem Aufschließen bei einer Aufschluss-Temperatur von zumindest 50°C insbesondere verstanden, dass die Temperatur des über mit der Schwefelsäure vermengten Zerkleinerungsguts im Mittel 50°C beträgt. Dass lokal höhere oder tiefere Temperaturen existieren können, ist irrelevant. Wird keine Temperatur explizit genannt, wird der entsprechende Verfahrensschritt vorzugsweise bei Raumtemperatur und Umgebungsdruck unter Umgebungsatmosphäre durchgeführt.

Unter einem Aufschließen wird verstanden, dass keine verdünnte Schwefelsäure verwendet wird. Es liegt zumindest zu einem Zeitpunkt der Reaktion die Konzentration der Schwefelsäure oberhalb von 90%, insbesondere 95%, besonders bevorzugt 98%.

Das Aufschließen wird so durchgeführt, dass Fluor als Fluorwasserstoff ausgetrieben wird. Es wird das Aufschließen so durchgeführt, dass Fluorbestandteile im Zerkleinerungsgut in Form von Fluorwasserstoff in das Abgas übergehen Es ist in anderen Worten so wenig Wasser in der Mischung aus Zerkleinerungsgut und Schwefelsäure vorhanden, dass eine Konzentration an wasserlöslichem Fluorid unterhalb von 100 Milligramm pro Kilogramm Aufschlussmaterial, insbesondere unterhalb von 10 Milligramm pro Kilogramm Aufschlussmaterial, liegt.

Unter dem Merkmal, dass das Zerkleinerungsgut mit konzentrierter Schwefelsäure aufgeschlossen wird, wird insbesondere verstanden, dass in einem Zeitintervall beim Durchführen des Verfahrens die Konzentration der Schwefelsäure so hoch ist, dass die oben angegebene Konzentration wasserlöslichen Fluorids pro Kilogramm Aufschlussmaterial erreicht wird. Vorzugsweise beträgt die Konzentration der Schwefelsäure dazu beim Durchführen des Verfahrens zumindest 95%, vorzugsweise zumindest 98%. Anders als bei der Verwendung von nicht-konzentrierter Schwefelsäure führt die Verwendung von konzentrierter Schwefelsäure dazu, dass kaum Fluorid im Aufschlussmaterial enthalten ist.

Insbesondere ist ein Aufschließen kein Laugen, da ein Laugen stets mit einer wässrigen Flüssigkeit durchgeführt wird.

Das Aufschlussmaterial ist insbesondere fest. Anders als bei Verfahren, bei denen keine konzentrierte Schwefelsäure eingesetzt wird, können sich die Reaktionsprodukte, also insbesondere die Metallsulfate, nicht in Wasser lösen und verbleiben als Feststoffe.

Unter Zerkleinerungsgut wird insbesondere ein Material verstanden, das durch Zerkleinern von Lithium-Batterien oder zumindest eines Bestandteils von Lithium-Batterien, insbesondere von Elektroden, und gegebenenfalls einer Nachbearbeitung, beispielsweise einem Trocknen, hervorgegangen ist. So können nach dem Zerkleinern mehrere Trennschritte zur Abtrennung von zerkleinerten metallischen Folien, Kunststofffolien oder Zellhüll- und Modulbestandteilen folgen. Es ist günstig, wenn das Zerkleinerungsgut höchstens 10 Gew.-%, vorzugsweise höchstens 5 Gew.-%, an Kunststoffen und/oder metallischen Verunreinigungen enthält. Das Zerkleinerungsgut kann pulverförmige Bestandteile von Elektroden von Lithium-Batterien enthalten. In einer allgemeineren Form kann statt des Zerkleinerungsguts auch unzerkleinertes Material verwendet werden, insbesondere Elektrodenmaterial. Günstig ist es jedoch, wenn dieses Elektrodenmaterial zerkleinert ist.

Das Zerkleinerungsgut kann insbesondere ein Material sein, das keiner pyrometallurgischen Behandlung, insbesondere keinem Rösten und keinem Verbrennen, unterzogen wurde. Allerdings wäre es auch möglich und von der Erfindung umfasst, dass das Zerkleinerungsgut keiner pyrometallurgischen Behandlung unterzogen wurde.

Unter dem Abführen des Abgases wird insbesondere verstanden, dass das Abgas von dem Ort des Aufschließens zumindest zu überwiegendem Teil weggeführt wird. Es ist möglich, dass das Abgas abgesaugt wird. Das Abgas enthält Fluorwasserstoff. Es ist möglich, nicht aber notwendig, dass der Fluorwasserstoff aus dem Abgas entfernt wird, insbesondere durch Fällen, vorzugsweise mit einer Kalziumverbindung. Es ist auch möglich, dass das Abgas einem chemischen Prozess zugeführt wird.

Unter dem nasschemischen Extrahieren wird insbesondere verstanden, dass eine Substanz, die bei 1013 hPa und Raumtemperatur flüssig ist oder in dem Zustand, in dem sie zugegeben wird, flüssig ist, zum Aufschlussmaterial oder einer Substanz, die aus dem Aufschlussmaterial hervorgeht, hinzugegeben wird, wodurch zumindest eine Substanz, die ein Metall enthält oder ein Metall selber ist, separiert wird.

Die Schwefelsäure ist vorzugsweise zumindest 90%ig, insbesondere vorzugweise zumindest 95%ig.

Das Aufschließen des Zerkleinerungsguts umfasst vorzugsweise den Schritt des Vermischens des Zerkleinerungsguts mit der Schwefelsäure. Das Vermischen kann ein Besprühen mit Schwefelsäure und/oder Zwangsmischen umfassen, beispielsweise ein Extrudieren, Kneten oder Rühren.

Die Aufschluss-Temperatur ist vorzugsweise kleiner als die Siedetemperatur der Schwefelsäure, um ein Verdampfen der Schwefelsäure zu verhindern. Vorzugsweise ist die Aufschluss-Temperatur kleiner als eine Binder-Zersetzungstemperatur eines Binders, mit dem das Aktivmaterial an seinem Träger angebunden ist. Alternativ kann die Aufschluss-Temperatur größer sein als die Binder-Zersetzungtemperatur. So wird vermieden, dass der Binder den Graphit verunreinigt. Es sei jedoch darauf hingewiesen, dass es möglich, nicht aber notwendig ist, dass das Zerkleinerungsgut einen entsprechenden Binder enthält. Besonders günstig sind Temperaturen im Intervall von 150°C bis 250°C.

Das Aufschließen kann zur Vermeidung der Oxidation von Graphit - wie die anderen Verfahrensschritte - unter Schutzgas, bspw. Stickstoff oder Argon, durchgeführt werden. Es ist möglich, nicht aber notwendig, dass auch andere Verfahrensschritte unter Schutzgas durchgeführt werden.

Das Aufschließen kann - wie die anderen Verfahrensschritte - diskontinuierlich oder kontinuierlich durchgeführt werden.

Gemäß einer bevorzugten Ausführungsform enthält das Aufschlussmaterial höchstens 15% Wasser, insbesondere unter 10% Wasser, vorzugsweise unter 5% Wasser. Ist kaum oder kein Wasser vorhanden, wird Fluor als Fluorwasserstoff ausgetrieben, sodass kaum oder keine Fluorverbindungen verbleiben.

Vorzugsweise wird das Aufschließen so lange durchgeführt, bis im Abgas eine Fluorwasserstoff-Konzentration unterhalb von 0,83 mg pro Kubikmeter liegt. Vorzugsweise liegt die Fluorwasserstoff-Konzentration unterhalb der Nachweisschwelle. Die Nachweisschwelle bezieht sich insbesondere auf eine infrarotspektrometrische Messung. Auf diese Weise wird sichergestellt, dass in den nachfolgenden Prozessschritten kein Fluorwasserstoff in signifikanter Menge abgegeben werden kann.

Alternativ oder zusätzlich wird das Aufschließen so lange durchgeführt, bis im Aufschlussmaterial eine Fluor-Konzentration c_{F} wasserlöslichen Fluorids unterhalb 100 Milligramm pro Kilogramm Aufschlussmaterial, vorzugsweise unter 10 mg/kg und besonders bevorzugt unterhalb der Nachweisschwelle liegt.

Vorzugsweise wird die Schwefelsäure zumindest stöchiometrisch, vorzugsweise überstöchiometrisch, zum Zerkleinerungsgut zugegeben. Hierunter wird insbesondere verstanden, dass so viel Schwefelsäure zugegeben wird, dass alle Nicht-Edelmetalle und Kupfer im Zerkleinerungsgut extrahierbar sind und gemäß einer bevorzugten Ausführungsform in einem nachfolgenden Verfahrensschritt extrahiert werden. Insbesondere wird so viel Schwefelsäure zugegeben, dass alle Nicht-Edelmetalle und Kupfer im Zerkleinerungsgut zu zumindest 99 Gewichtsprozent in Lösung gehen. Es sei darauf hingewiesen, dass selbst bei überstöchiometrischer Zugabe von Schwefelsäure auf Grund der Endlichkeit der Reaktionsgeschwindigkeit und des sich einstellenden chemischen Gleichgewichts Metallreste verbleiben können, die nicht mit der Schwefelsäure reagiert haben.

Vorzugsweise wird die konzentrierte Schwefelsäure mit einem Gewichtsverhältnis zum Gewicht des Zerkleinerungsguts von höchstens 40 zu 1, insbesondere höchstens 20 zu 1, bevorzugt höchstens 10 zu 1, eingesetzt. In anderen Worten werden pro Kilogramm Zerkleinerungsgut höchstens 40 Kilogramm konzentrierte Schwefelsäure zugegeben.

Beispielsweise ist es günstig, wenn zumindest 1,8 Gramm H₂SO₄ pro Gramm Kathodenmaterial, insbesondere zumindest 1,8 Gramm H₂SO₄ pro Gramm Elektrodenaktivmaterial zugegeben werden. Das Kathodenmaterial ist insbesondere LiMO₂, wobei M für ein Übergangsmetall oder Aluminium steht. Die Kathode ist diejenige Elektrode, die bei Entladung positiv geladen ist.

Vorzugsweise umfasst das Verfahren den Schritt des Abscheidens von Fluorwasserstoff aus dem Abgas, insbesondere des Fällens von Fluorwasserstoff aus dem Abgas. Das erfolgt beispielsweise mittels einer Kalziumverbindung, sodass sich Kalziumfluorid bildet.

Gemäß dem Aspekt entsprechend Anspruch 1 - und bezüglich des Aspekts entsprechend Anspruch 10 vorzugsweise - umfasst das Verfahren die Schritte eines Laugens des Aufschlussmaterials und eines Abscheidens von Graphit, sodass eine Roh-Flüssigkeit erhalten wird. Günstig ist es, wenn das Verfahren den Schritt des Abtrennens der pulverförmigen Bestandteile von Metallfolien, Metall- und Kunststoffstücken umfasst, sodass separates Pulver aus Elektrodenaktivmaterial entsteht.

Das Laugen erfolgt vorzugsweise mit einer wässrigen Flüssigkeit, insbesondere mit Wasser.

Ein Gewichtsverhältnis von Aufschlussmaterial zur wässrigen Flüssigkeit beträgt vorzugsweise 1:2 bis 1:20. Das Laugen wird für zumindest 1 Minute und vorzugsweise für höchstens 10 Stunden durchgeführt. Das Abscheiden ist vorzugsweise ein Abfiltrieren. Es ist aber auch möglich, dass der Graphit abzentrifugiert oder anderweitig abgeschieden wird. Durch den Aufschluss mit Schwefelsäure wird in aller Regel erreicht, dass die Konzentration an Metall, insbesondere an Metallionen, im Graphit so klein ist, dass der Graphit als Elektrodengraphit zur Herstellung von neuen Lithium-Batterien oder anderen Batterien geeignet ist.

Es ist möglich, dass das Verfahren die Schritte eines Reinigens des abgeschiedenen Graphits umfasst, was beispielsweise mit Wasser oder einer verdünnten Mineralsäure erfolgen kann.

Das Reinigen wird vorzugsweise so intensiv durchgeführt, dass sich im Waschwasser nur noch <10 mg/kg Metallionen befinden. Es hat sich herausgestellt, dass Graphit bei bekannten Verfahren in seiner Kristallstruktur so stark geschädigt werden kann, dass ein Einsatz als Elektrodengraphit nicht möglich ist. Dadurch, dass gemäß einer bevorzugten Ausführungsform des Verfahrens vor dem Abscheiden des Graphits keine nasschemische oder thermische Oxidation durchgeführt wird, ist der Graphit in seiner Kristallstruktur so wenig beschädigt, dass er meistens erneut in Batterien eingesetzt werden kann.

Bei der Laugung liegt der pH-Wert vorzugsweise zwischen -0,7 und 4. Das Laugen wird vorzugsweise bei Raumtemperatur durchgeführt, das ist aber nicht notwendig.

Vorzugsweise umfasst das Verfahren den Schritt eines Abscheidens von Kupfer aus der Roh-Flüssigkeit, sodass entkupferte Roh-Flüssigkeit entsteht. Es ist möglich, nicht aber notwendig, dass das Abscheiden des Kupfers der unmittelbar nach dem Laugen stattfindende nasschemische Prozess ist. Insbesondere ist es auch möglich, dass vor dem Abscheiden von Kupfer andere Metalle abgeschieden werden. Insbesondere handelt es sich um ein selektives Kupfer-Abscheiden. Eine Temperatur beim Abscheiden des Kupfers liegt vorzugsweise zwischen 0°C und 100°C. Das Abscheiden wird vorzugsweise über 1 Minute bis 720 Minuten durchgeführt.

Das Abscheiden kann beispielsweise eine Zementation sein. Bei einer Zementation kommt es zu einer elektrochemischen Reaktion der Kupfer-Ionen, sodass sich elementares Kupfer bildet. Beispielsweise wird die Zementation mit einem eisenhaltigen Substrat durchgeführt.

Alternativ umfasst das Abscheiden ein Fällen. Beispielsweise kann das Kupfer als Kupfersulfid gefällt werden. Dazu wird der Roh-Flüssigkeit eine fällende Substanz zugeführt, beispielsweise eine schwefelhaltige Substanz. Dabei kann es sich um Natriumhydrogensulfid handeln. In diesem Fall fällt Kupfersulfid aus, insbesondere CuS. Günstig ist es, wenn die fällende Substanz überstöchiometrisch zugesetzt wird, sodass eine Konzentration an Kupfer-Ionen in der entkupferten Roh-Flüssigkeit vorzugsweise unter 10 mg pro Liter liegt, insbesondere vorzugsweise unter 1 mg pro Liter.

Vorzugsweise umfasst das Verfahren den Schritt eines Oxidierens von Eisen-Ionen und das Ausfällen von Eisen. Insbesondere werden Fe²⁺-Ionen in der entkupferten Roh-Flüssigkeit zu Fe³⁺-Ionen oxidiert. Das kann mit einem Oxidationsmittel, beispielsweise mit einer Sauerstoffverbindung erfolgen. Bei der Sauerstoffverbindung kann es sich beispielsweise um Wasserstoffperoxid oder Ozon handeln.

Das Ausfällen des Eisens erfolgt vorzugsweise als Hydroxid. Es wird durch das Ausfällen eine Rein-Flüssigkeit erhalten.

Besonders günstig ist es, wenn Aluminium ausgefällt wird, vorzugsweise in Form eines Hydroxids. Zudem ist es günstig, wenn vorhandenes Titan ausgefällt wird, vorzugsweise in Form von Titanoxid.

Das Ausfällen von Eisen und/oder Aluminium und/oder Titan erfolgt vorzugsweise durch Zugeben von NaOH, Na₂CO₃, KOH, MgO oder Ammoniumhydroxid.

Es sei darauf hingewiesen, dass der Begriff der Rein-Flüssigkeit lediglich andeuten soll, dass als Verunreinigung angesehene Metalle wie Eisen, sowie gegebenenfalls Kupfer, Aluminium und Titan, entfernt wurden. Insbesondere soll der Begriff Rein-Flüssigkeit keinerlei Angabe über die Konzentration anderer Substanzen machen.

Unter dem Merkmal, dass eine Sauerstoffverbindung zum Oxidieren verwendet wird, wird verstanden, dass bei der Redox-Reaktion Sauerstoff seine Oxidationszahl ändert. Alternativ kann als Oxidationsmittel beispielsweise eine Verbindung verwendet werden, die Sauerstoff enthält, dieser aber bei der Redoxreaktion seine Oxidationszahl nicht ändert.

Vorzugsweise wird so lange oxidiert, bis das elektrochemische Potenzial zwischen 0,8 und 1,4 Volt bezogen auf die Normal-Wasserstoffelektrode liegt. In diesem Spannungsbereich findet die Redaktion Fe²⁺ ⇆ Fe³⁺ + e⁻ statt.

Vorzugsweise beträgt der pH-Wert bei dem Oxidieren höchstens 8,7. Beim Ausfällen beträgt der pH-Wert vorzugsweise zumindest 4,3, insbesondere zumindest 4,8. Insbesondere beträgt der pH-Wert beim Ausfällen höchstens 8,7, vorzugsweise höchstens 7,8. Auf diese Weise wird erreicht, dass Eisen und/oder Aluminium und/oder Titan zu einem sehr großen Anteil ausgefällt werden.

Vorzugsweise umfasst das Verfahren eine Solventextraktion von Kobalt. Dies erfolgt vorzugsweise aus der Rein-Flüssigkeit. Besonders günstig ist es, dazu einen Kobalt-Komplexbildner zu verwenden, beispielsweise einen in einer lipophilen Flüssigkeit gelösten Komplexbildner. Die lipophile Flüssigkeit kann beispielsweise ein Mineralöl sein, beispielsweise Kerosin. Eine Möglichkeit ist, eine organische Phosphin-Säure zu verwenden, beispielsweise Cyanex 272 (Bis(2,4,4-Trimethylpentyl)phosphin-säure).

Vorzugsweise umfasst das Verfahren den nachfolgenden Schritt eines Solvent-Extrahierens von Nickel. Das erfolgt vorzugsweise mit einem Nickel-Komplexbildner. Günstig ist es, wenn das Solvent-Extrahieren aus der Rein-Flüssigkeit erfolgt. Der Komplexbildner ist vorzugsweise in einer lipophilen Flüssigkeit gelöst, beispielsweise in einem Mineralöl wie Kerosin.

Günstig ist es, wenn Kobalt und Nickel in einem kombinierten Extraktionsverfahren aus der Rein-Flüssigkeit extrahiert werden, sodass eine kobalt- und nickelabgereicherte Flüssigkeit erhalten wird.

Vorzugsweise wird Mangan in einem nachfolgenden Extraktionsschritt aus dieser Flüssigkeit entfernt, insbesondere durch Solvent-Extrahieren, vorzugsweise mittels eines Mangan-Komplexbildners.

Zum Extrahieren von Nickel-/oder Kobalt ist beispielsweise Cyanex 301 (Bis(2,4,4-trimethylpentyl)dithiophosphinsäure) geeignet, das in Kerosin gelöst eingesetzt werden kann. Nickel kann beispielsweise mittels Salzsäure oder Schwefelsäure aus der beladenen organischen Phase reextrahiert werden und anschließend als Nickelchlorid oder Nickelsulfat auskristallisiert werden. Kobalt kann beispielsweise ebenfalls unter der Verwendung von Salzsäure und/oder Schwefelsäure aus der beladenen organischen Phase reextrahiert werden und anschließend als Kobaltchlorid oder Kobaltsulfat auskristallisiert werden. Mittels Salzsäure und/oder Schwefelsäure kann zudem Mangan aus der beladenen organischen Phase reextrahiert werden und anschließend Manganchlorid und/oder Mangansulfat auskristallisiert werden. Alternativ kann Mangan, beispielsweise als Carbonat, ausgefällt werden.

Durch das Entfernen von Kobalt, Nickel und/oder Mangan wird eine Ziel-Flüssigkeit erhalten. Vorzugsweise wird Lithium aus der Ziel-Flüssigkeit ausgefällt. Das kann beispielsweise durch Zugabe eines Phosphats, beispielsweise Natriumphosphat, oder eines Karbonats, beispielsweise Natriumkarbonat, erfolgen. Das Ausfällen des Lithiums erfolgt vorzugsweise bei pH 7 bis 14.

Wenn die Rein-Flüssigkeit weder Kobalt noch Nickel noch Mangan enthält, wird vorzugsweise Lithium aus der Rein-Flüssigkeit (28) ausgefällt. Dieser Fall tritt ein, wenn beispielsweise ausschließlich Lithium-Eisenphosphat-Batterien zum Herstellen des Zerkleinerungsmaterials verwendet werden.

Vorzugsweise umfasst das Zerkleinerungsgut pulverförmiges Elektrodenmaterial aus Lithium-Ionen Batterien. Aus den zerkleinerten Lithium-Ionen Batterien werden zerkleinerte Elektrodenfolien, Separatorfolien, andere Folien, die Zellhüllmaterialien sowie Bestandteile der Batteriemodulperipherie abgetrennt, so dass pulverförmiges Elektrodenaktivmaterial entsteht.

Vorzugsweise wird das Zerkleinerungsgut durch Zerkleinern von Batterien und nachfolgendes Inaktivieren des dadurch erhaltenen Roh-Zerkleinerungsgutes durch Trocknen erhalten. Besonders günstig ist es, wenn das Zerkleinern unter Inertgasatmosphäre und/oder Vakuum erfolgt. Wenn das Zerkleinern unter Vakuum erfolgt, beträgt ein Druck vorzugsweise höchstens 300 hPa. Eine Temperatur beträgt vorzugsweise höchstens 100°C, vorzugsweise höchstens 80°C. Auf diese Weise wird die Bildung von fluororganischen Substanzen vermieden. Das Fluor verbleibt im Zerkleinerungsgut und wird, wie oben beschrieben, durch das Aufschließen mit Schwefelsäure ausgetrieben.

Nach dem Inaktivieren werden gemäß einer bevorzugten Ausführungsform zerkleinerte metallische Stromsammlerfolien, Separatorfolien der Zellhüllbestandteile und der Modulbestandteile abgetrennt, sodass das Zerkleinerungsgut erhalten wird.

Vorzugsweise werden die Batterien vorentladen und/oder durch Demontieren von Batteriesystemen oder Batteriemodulen erhalten.

Bei einer erfindungsgemäßen Wiedergewinnungsanlage ist der Reaktor vorzugsweise ein Drehrohrofen oder ein beheizter Zwangsmischer. Damit wird eine innige Vermischung von Schwefelsäure mit dem Zerkleinerungsgut gewährleistet. Der Reaktor erhält beispielsweise eine Temperatursteuerung oder -regelung, mittels der die Temperatur der Mischung aus Zerkleinerungsgut und Schwefelsäure auf die Aufschluss-Temperatur gebracht und drauf gehalten wird. Es ist auch möglich, dass das Aufschließen diskontinuierlich erfolgt, beispielsweise in einem Kammerofen.

Gemäß einer bevorzugten Ausführungsform umfasst die Wiedergewinnungsanlage eine Laugungsvorrichtung zum Laugen des Aufschlussmaterials in einem wässrigen Medium.

Die Wiedergewinnungsanlage besitzt vorzugsweise einen Fluorabscheider zum Abscheiden des Fluorwasserstoffs. Beispielsweise kann der Fluorwasserstoff ausgefällt werden. Es ist aber auch möglich, dass der Fluorwasserstoff zu einer Reaktion mit einer anderen Substanz, beispielsweise einer organischen Substanz, abgeleitet wird.

Günstig ist es, wenn die Wiedergewinnungsanlage mobil ausgebildet ist. In anderen Worten ist es möglich, die Wiedergewinnungsanlage zu bewegen, ohne dass sie demontiert werden muss. Vorzugsweise ist die Wiedergewinnungsanlage in einem 20-Fuß-Container oder einem 40-Fuß-Container angeordnet.

Der Transport von Zerkleinerungsmaterial ist häufig mit Risiken behaftet, da es brennbare Substanzen und Fluorverbindungen enthält. Es besteht daher die - gegebenenfalls tolerierbar kleine - Gefahr, dass es zu einem Brand mit der Freisetzung von Fluorwasserstoff kommt. Es ist daher günstig, wenn der Elektrolyt, Zellbestandteile, Elektrodenfolien und Elektrodenpulver dezentral separiert werden. Vorteilhaft ist es daher, wenn die Wiedergewinnungsanlage eine Batterie-Verarbeitungsanlage zum Zerkleinern von Lithium-Batterien aufweist, wie sie in der DE 10 2015 207 843 A1 beschrieben ist. Es ist dann möglich, nicht aber notwendig, dass auch der Reaktor die einer Schwefelsäure-Zuführvorrichtung und die einer Abführvorrichtung, sowie gegebenenfalls weitere Vorrichtungen, die in den Ansprüchen genannt sind, mobil ausgebildet sind und vorzugsweise gemeinsam in einem 20-Fuß-Container oder einem 40-Fuß-Container angeordnet sind.

Eine Graphit-Rückgewinnungsvorrichtung weist eine Graphit-Abscheidevorrichtung, insbesondere einen Filter, zum Abscheiden von Graphit, auf und ist in einer Materialflussrichtung hinter dem Reaktor angeordnet.

Es umfasst die Graphit-Rückgewinnungsvorrichtung eine Auswaschvorrichtung zum Auswaschen anhaftender Laugelösung aus dem Graphit. Diese Auswaschvorrichtung ist vorzugsweise zum Auswaschen der Laugelösung mit einer wässrigen Flüssigkeit ausgebildet.

Vorzugsweise umfasst die Wiedergewinnungsanlage einen Fluor-Detektor zum Detektieren von Fluorverbindungen, insbesondere von Fluorwasserstoff. Bei dem Fluor-Detektor handelt es sich vorzugsweise um einen Fluorwasserstoff-Messer zum Messen einer Fluorwasserstoff-Konzentration im Abgas.

Gemäß einer bevorzugten Ausführungsform umfasst die Wiedergewinnungsanlage eine Steuereinheit, die mit dem Fluor-Detektor verbunden ist und ausgebildet ist zum automatischen Ansteuern des Reaktors, sodass dieser die Aufschluss-Temperatur solange hält, bis die Fluor-Konzentration, insbesondere die Fluorwasserstoff-Konzentration, im Abgas einen vorgegebenen Grenzwert unterschritten hat.

Gemäß einer bevorzugten Ausführungsform umfasst die Wiedergewinnungsanlage einen Fällgut-Abscheider zum Abscheiden, insbesondere Abfiltern, von ausgefällten Cu oder Cu-Verbindungen.

Günstig ist es, wenn die Wiedergewinnungsanlage eine Solvent-Extraktionsvorrichtung zum Extrahieren von Kobalt, Mangan und/oder Nickel aufweist, die in Materialflussrichtung hinter der Graphit-Rückgewinnungsvorrichtung angeordnet ist.

Vorzugsweise besitzt die Wiedergewinnungsanlage zudem einen Fe/Al/Ti-Fällgut-Abscheider zum Abscheiden, insbesondere Abfiltern, von ausgefällten Eisen- und/oder Aluminium- und/oder Titanverbindungen. Der Fe/Al/Ti-Fällgut-Abscheider ist vorzugsweise in Materialflussrichtung hinter dem Drehrohrofen und vor einer gegebenenfalls vorhandenen Solvent-Extraktionsvorrichtung angeordnet.

Im Folgenden wird die Erfindung anhand der beigefügten Zeichnungen näher erläutert. Dabei zeigt:
- Figur 1: ein Flussdiagramm eines erfindungsgemäßen Verfahrens und
- Figur 2: eine schematische Ansicht einer erfindungsgemäßen Wiedergewinnungsanlage,
- Figur 3: ein Flussdiagramm für ein erfindungsgemäßes Verfahren zum Verarbeiten von kobalt-, nickel- und manganfreiem Zerkleinerungsmaterial,
- Figur 4: das Flussdiagramm eines Verfahrens zur Verarbeitung von kobalt- und nickelfreiem, manganhaltigem Zerkleinerungsmaterial und
- Figur 5: ein Flussdiagramm eines erfindungsgemäßen Verfahrens für manganund nickelfreies, kobalthaltiges Zerkleinerungsmaterial,
- Figur 6: ein Flussdiagramm für die Verarbeitung von manganfreies, kobalt- und nickelhaltiges Zerkleinerungsmaterial.

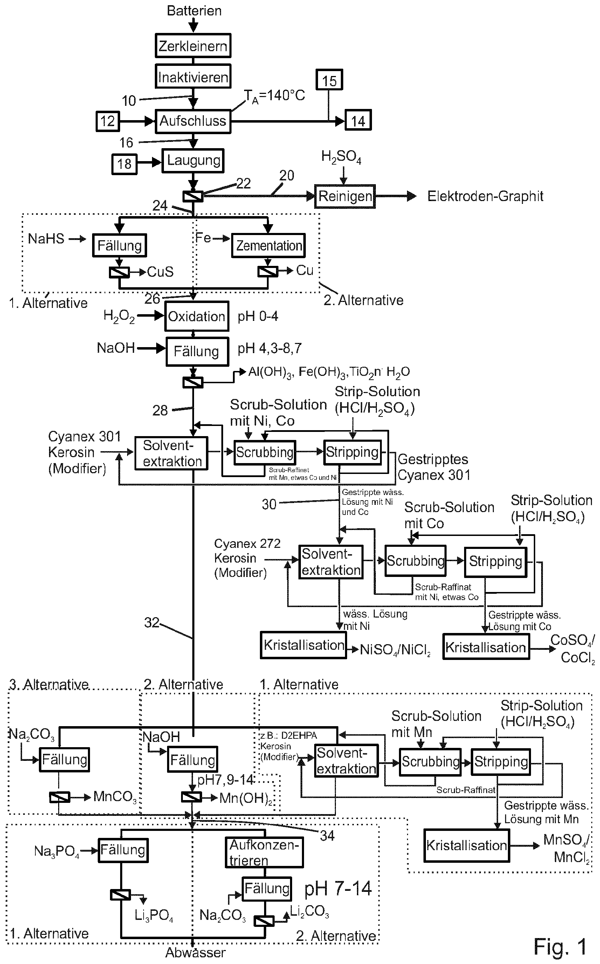

Figur 1 zeigt ein Flussdiagramm eines erfindungsgemäßen Verfahrens. Zunächst wird Zerkleinerungsgut, beispielsweise in Form zerkleinerten Elektrodenaktivmaterials bereitgestellt. Das kann beispielsweise mittels eines Verfahrens geschehen, das in der DE 10 2015 207 843 A1 beschrieben ist. Es ist insbesondere möglich, dass zunächst Batterien zerkleinert werden, sodass Roh-Zerkleinerungsgut erhalten wird. In einem nachfolgenden Schritt wird das Roh-Zerkleinerungsgut durch Trocknen inaktiviert, sodass inaktiviertes Roh-Zerkleinerungsgut erhalten wird.

Das Inaktivieren ist vorzugsweise ein Trocknen. Das Trocknen erfolgt beispielsweise unter Inertgasatmosphäre oder unter Vakuum. Günstig ist es, wenn ein Druck höchstens 300 hPa beträgt und eine Temperatur beim Trocknen höchstens 80°C beträgt. So wird Zerkleinerungsgut 10 erhalten, das nicht mehr in signifikantem Maße elektrochemisch reagieren kann, da der Leichtsiederanteil des Elektrolyts zu gering ist.

Nach dem Inaktivieren wird aus dem Roh-Zerkleinerungsgut gemäß einer bevorzugten Ausführungsform des Verfahrens das Elektrodenaktivmaterial abgetrennt. Dies ist vorzugsweise eine Kombination aus mechanischer Beanspruchung, Magnetscheidung, Nichteisenmetallabtrennung, Siebung und Dichtetrennung. Günstig ist es eine Luftstrahlsiebung zu verwenden, so wird durch feinere Trennkorngrößen ein reineres Siebgut erhalten.

Dieses Zerkleinerungsgut 10 wird mit Schwefelsäure 12 vermischt. Das Vermischen kann beispielsweise ein Verrühren mittels eines Rührers sein. Es ist allerdings auch möglich, dass das Vermischen ein bloßes Zugeben ist. Das ist insbesondere dann möglich, wenn sich das Zerkleinerungsgut 10 in einem Reaktor in Form eines Drehrohrofens befindet. Es ist zudem möglich, dass das Zerkleinerungsgut und die Schwefelsäure in einem Reaktionsbehälter vorzugsweise aus Stahl miteinander vermischt werden. Das so erhaltene angemischte Zerkleinerungsgut wird danach einem Reaktor, insbesondere einem Drehrohrofen, zugeführt.

Die Schwefelsäure 12 ist vorzugsweise zumindest 95%ig. Das Zerkleinerungsgut 10 und die Schwefelsäure 12 werden auf eine Aufschluss-Temperatur T_{A} gebracht, die beispielsweise zumindest T_{A} = 140°C, insbesondere zumindest 150°C, beträgt. Sofern ein pH-Wert bestimmbar ist, liegt dieser für die Mischung aus Zerkleinerungsgut und Schwefelsäure unterhalb von 1,5. In der Regel ist der Wassergehalt der Mischung aber zu klein, um den pH-Wert zu bestimmen.

Durch den Aufschluss entsteht Abgas 14, das insbesondere Fluorwasserstoff HF enthält. Der Aufschluss erfolgt so lange, bis in einem diskontinuierlichen Vergleichsversuch in einem Behälter ohne kontinuierliche Materialzugabe im Abgas 14 ein Gehalt eine Fluor-Verbindung, insbesondere ein Fluorwasserstoffgehalt, unter einer vorgegebenen Schwelle von beispielsweise 0,83 mg pro Kubikmeter liegt. Das wird mittels eines Fluor-Detektors 15 überprüft, der kontinuierlich eine Fluor-Konzentration misst.

Erfolgt der Aufschluss in einem Chargenverfahren, wird der Aufschluss so lange durchgeführt, dass der Gehalt eine Fluor-Verbindung, insbesondere ein Fluorwasserstoffgehalt, unter einer vorgegebenen Schwelle von beispielsweise 0,83 mg pro Kubikmeter liegt.

Alternativ oder zusätzlich wird das Aufschließen so lange durchgeführt, bis im Aufschlussmaterial eine Fluor-Konzentration c_{F} wasserlöslichen Fluorids unterhalb 100 Milligramm pro Kilogramm Aufschlussmaterial, vorzugsweise unter 10 mg/kg und besonders bevorzugt unterhalb der Nachweisschwelle liegt. In anderen Worten wird die Verweilzeit des Zerkleinerungsguts 10 und der Schwefelsäure 12 so gewählt, dass das Aufschlussmaterial eine Fluor-Konzentration c_{F} an wasserlöslichem Fluorid hat, die die genannten Werte nicht überschreitet.

Es entsteht zudem Aufschlussmaterial 16, das in guter Näherung als fluorfrei betrachtet werden kann. Das Aufschlussmaterial 16 wird mit Wasser 18 versetzt und dadurch gelaugt. Die Laugung kann in dem gleichen Behälter erfolgen, in dem der Aufschluss des Zerkleinerungsguts erfolgte, das ist aber nicht notwendig. Es ist beispielsweise auch möglich, dass das Aufschlussmaterial in einen Behälter gefüllt wird, der vorzugsweise schon Wasser enthält. Die Laugung erfolgt bei einem pH-Wert von -0,7 bis 4 und vorzugsweise ohne aktive Wärmezu- oder -abfuhr.

Nach dem Laugen wird Graphit 20 mittels einer Graphit-Abscheidevorrichtung 22 geschieden. Im vorliegenden Fall ist die Graphit-Abscheidevorrichtung 22 ein Filter mit einer Porengröße von höchstens 15 Mikrometer, vorzugsweise höchstens 10 Mikrometer. Günstig ist es, wenn die Porengröße zumindest 0,5 Mikrometer beträgt.

Der Graphit 20 kann in einem nachfolgenden Verfahrensschritt, beispielsweise mit Wasser, einem Alkohol, einem organischen Lösungsmittel oder einer Mineralsäure, gereinigt werden, sodass Elektroden-Graphit erhalten wird. Elektroden-Graphit ist solcher Graphit, der zur Herstellung von Elektroden, insbesondere für Lithium-Batterien, geeignet ist. Es wird so eine Roh-Flüssigkeit 24 erhalten.

Aus der Roh-Flüssigkeit 24 wird metallisches Kupfer Cu erhalten, beispielsweise durch Zementation. Dazu wird beispielsweise metallisches Eisen in Kontakt mit der Roh-Flüssigkeit 24 gebracht, sodass Eisen-Ionen in Lösung gehen und Kupfer metallisch ausfällt.

Alternativ wird das Kupfer als Kupfersulfid abgeschieden. Das erfolgt beispielsweise durch Fällung mittels Zugabe von Natriumhydrogensulfid NaHS. Durch das Abscheiden des Kupfers wird entkupferte Roh-Flüssigkeit 26 erhalten. Diese hat einen pH-Wert im Intervall von 0 bis 4, beispielsweise pH 1.

Die Fe²⁺-Ionen in der entkupferten Roh-Flüssigkeit 26 werden nachfolgend zu Fe³⁺-Ionen oxidiert. Das erfolgt im vorliegenden Fall durch Zugabe von Wasserstoffperoxid H₂O₂. Es kann jedoch auch ein anderes Oxidationsmittel verwendet werden. Der pH-Wert der entkupferten Roh-Flüssigkeit liegt vor der Oxidation unter 4,3. Dieser Schritt wird vorzugsweise ohne aktive Wärmezu- oder -abfuhr durchgeführt.

In einem nachfolgenden Schritt wird Eisen, Aluminium und ggf. Titan in Form eines Hydroxids ausgefällt. Hierzu wird der pH-Wert auf einen Wert zwischen 4,3 und 8,7 erhöht. Das erfolgt durch Zugabe von Natriumhydroxid und nachfolgendem Abscheiden, insbesondere Abfiltern oder Abzentrifugieren, des entstehenden Niederschlags. Es wird so neben den abgeschiedenen Hydroxiden eine Rein-Flüssigkeit 28 erhalten. Aus der Rein-Flüssigkeit werden mittels Solvent-Extraktion Nickel und Kobalt extrahiert. Das erfolgt im vorliegenden Fall mittels Cyanex 301, das in einem organischen Lösungsmittel, in der Regel Kerosin, gelöst ist.

Figur 1 zeigt, dass zwei Solvent-Extraktionsschritte ineinander geschachtelt sind. Zunächst werden Kobalt und Nickel mittels Cyanex 301, das in Kerosin gelöst ist, extrahiert. Durch Stripping mit Säure, insbesondere Salz- oder Schwefelsäure, wird eine Lösung 30 erhalten, die Nickel und Kobalt enthält. Diese werden nach weiterer Trennung mittels Cyanex 272 getrennt voneinander auskristallisiert.

Wenn wie hier oder allgemein in der Beschreibung der Name eines Metalls genannt wird, beispielsweise Mangan, so werden damit grundsätzlich die die Metalle in elementarer Form sowie Verbindungen, die dieses Metall enthalten, im Allgemeinen einschließlich der Metallionen gemeint. Die Aussage, dass Mangan, Kobalt und Nickel extrahiert werden, bedeutet damit auch, dass Mangan-, Kobalt- und Nickel-Ionen und solche Verbindungen, insbesondere auch Ionen, entfernt werden, die Mangan, Kobalt und Nickel enthalten.

Durch das Extrahieren von Kobalt und Nickel wird eine manganhaltige Ziel-Flüssigkeit 32 erhalten. Der pH-Wert der Ziel-Flüssigkeit 32 kann zwischen -0,7 und 10,5 liegen.

Für die weitere Verarbeitung der Ziel-Flüssigkeit 32 existieren (zumindest) drei Alternativen. Gemäß einer ersten Alternative wird aus der manganhaltigen Ziel-Flüssigkeit 32 mittels Solvent-Extraktion das Mangan entfernt. Das kann beispielsweise mittels D2EHPA erfolgen, das in Kerosin gelöst ist.

Gemäß einer zweiten und dritten Alternative wird das Mangan durch Fällung entfernt, das kann beispielsweise durch Zugabe von Natriumhydroxid erfolgen. Gemäß einer dritten Alternative kann die Fällung durch Zugabe von Natriumkarbonat erfolgen.

Durch das Entfernen des Mangans entsteht eine Ziel-Flüssigkeit 34. Diese Flüssigkeit enthält als wichtigen Bestandteil Lithium-Ionen. Das Lithium wird aus der Ziel-Flüssigkeit 34 ausgefällt. Das erfolgt beispielsweise mittels Natriumkarbonat. Eine günstige Temperatur liegt höchstens 30 Kelvin unterhalb des Siedepunkts der Ziel-Flüssigkeit 34 und vorzugsweise über 50°C.

Optional wird das Lithiumkarbonat mittels Wasser bei 50-100 °C, vorzugsweise 80-100°C, und/oder Ethanol gewaschen.

Es ist günstig, wenn vor dem Ausfällen ein Schritt des Aufkonzentrierens vorgeschaltet ist, sodass die Konzentration an Lithium erhöht wird. Alternativ kann das Lithium als Lithiumphosphat ausgefällt werden, dazu kann beispielsweise Natriumphosphat zugegeben werden.

Das Aufkonzentrieren kann beispielsweise durch Umkehrosmose und/oder Eindampfen erfolgen.

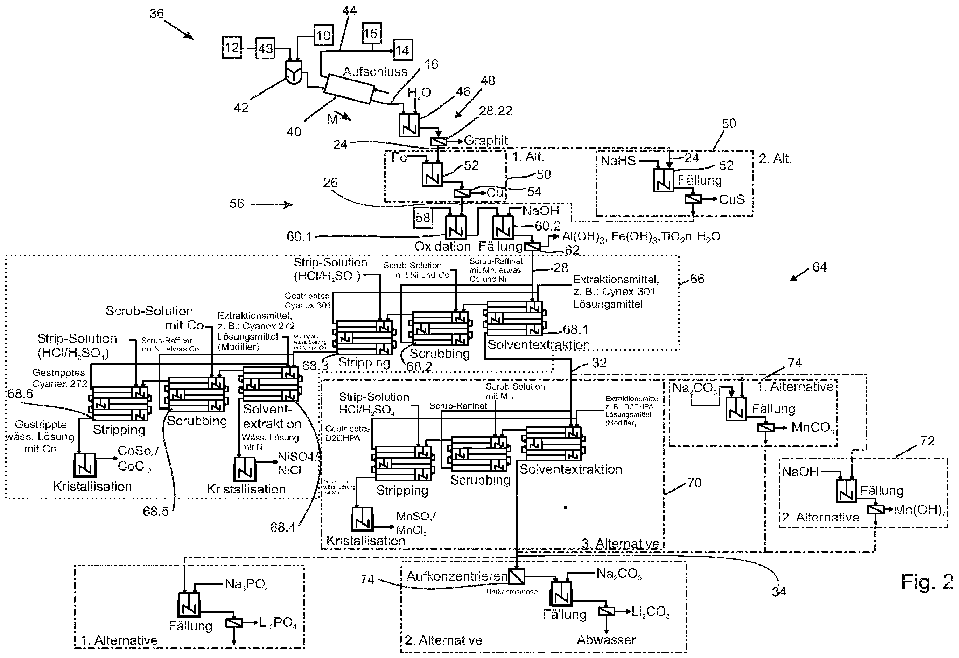

Figur 2 zeigt eine schematische Ansicht einer erfindungsgemäßen Wiedergewinnungsanlage 36 zum Verarbeiten von Lithium-Batterien, im vorliegenden Fall in Form von Zerkleinerungsgut 10, das aus Lithium-Batterien hergestellt ist. Alternativ ist auch möglich, dass Elektrodenmaterial, das nicht zerkleinert sein muss, in der Wiedergewinnungsanlage verarbeitet wird. Die Wiedergewinnungsanlage 36 umfasst im vorliegenden Fall einen Reaktor 40 in Form eines Drehrohrofens, in dem das Zerkleinerungsgut 10 mit Schwefelsäure 12 aufgeschlossen wird. Das Zerkleinerungsgut 10 und die Schwefelsäure 12 wurden vorher in einem Mischer 42 miteinander vermischt. Der Mischer 42 ist vorteilhaft, aber entbehrlich. Die Schwefelsäure 12 wird mittels einer Schwefelsäure-Zuführvorrichtung 43 zugeführt, bei der es sich beispielsweise um eine Zudosiervorrichtung handeln kann, die einen Schwefelsäurebehälter und ein steuerbares Ventil umfasst. Es ist jedoch auch möglich, dass die Schwefelsäure 12 aus einem Behälter zugegossen wird.

Die Wiedergewinnungsanlage 36 umfasst eine Abführvorrichtung 44 in Form einer Abgasleitung, die mit einem Unterdruckerzeuger verbunden sein kann, sodass das Abgas 14 aus dem Reaktor 40 gesaugt wird. Alternativ ist es möglich, dass der im Reaktor 40 entstehende Überdruck das Abgas 14 durch die Abführvorrichtung 44 drückt. Die Abführvorrichtung 44 kann einen Wäscher zum Auswaschen von Fluorwasserstoff aufweisen. Beispielsweise wird das Abgas 14 in diesen Wäscher mit einer Kalziumverbindung, beispielsweise mit einer wässrigen Lösung, die Kalziumionen enthält, in Verbindung gebracht, sodass Fluorwasserstoff im Abgas 14 ausgewaschen wird. Selbstverständlich sind auch andere Methoden der Entfernung des Fluorwasserstoffs aus dem Abgas 14 denkbar. Auch ist es möglich, dass das Abgas 14 mittels der Abführvorrichtung 44 einem Reaktor zugeführt wird, den der Fluorwasserstoff beispielsweise mit einer organischen Substanz reagiert.

Die Fluor-Konzentration c_{F} wird mittels des Fluor-Detektors 15 erfasst.

In Materialflussrichtung M hinter dem Reaktor 40 ist eine Laugungsvorrichtung 46 angeordnet, in der das Aufschlussmaterial 16, beispielsweise mittels Wasser, gelaugt wird.

In Materialflussrichtung M hinter der Laugungsvorrichtung 46 ist eine Graphit-Rückgewinnungsvorrichtung 48 angeordnet die im vorliegenden Fall lediglich die Graphit-Abscheidevorrichtung 22 in Form eines Filters aufweist. Eine optionale Auswaschvorrichtung zum Auswaschen anhaftender Laugelösung aus dem Graphit ist nicht dargestellt. Es ist auch möglich, den Graphit zunächst in einen Transportbehälter abzufüllen und das Auswaschen anhaftender Laugelösung nach Transport an einen anderen Ort durchzuführen.

In Materialflussrichtung M hinter der Graphit-Rückgewinnungsvorrichtung 48 ist ein Kupferextraktor 50 angeordnet. Der Kupferextraktor umfasst gemäß einer ersten Alternative einen Behälter 52 zum Zementieren des Kupfers nach Zugabe von Eisen, insbesondere in Form von Eisenblech oder Eisenspänen, sowie ein Fällgut-Abscheider 54 zum Abscheiden ausgewählter Kupfer-Verbindungen. Bei dem Fällgut-Abscheider 54 kann es sich beispielsweise um einen Filter handeln. Die Porengröße des Filters ist vorzugsweise kleiner 50 Mikrometer und zumindest 1 Mikrometer.

Gemäß einer alternativen Ausführungsform ist der Fällgut-Abscheider ausgebildet zum Abscheiden von Kupfersulfid und der Behälter 52 dient der Reaktion der Roh-Flüssigkeit 24 mit NaHS, sodass Kupfersulfid ausfällt.

In Materialflussrichtung hinter dem Kupferextraktor 50 ist ein Fe/Al/Ti-Fällgut-Abscheider 56 angeordnet, in dem der entkupferten Roh-Flüssigkeit 26 ein Oxidationsmittel 58 zugegeben wird. Das kann in einem ersten Behälter 60.1 erfolgen. Die erhaltene Lösung wird danach in einen zweiten Behälter 60.2 überführt, beispielsweise gepumpt. In diesem zweiten Behälter 60.2 wird ein Hydroxid zugefügt, insbesondere ein Alkalihydroxid. Beispielsweise wird Natriumhydroxid zugeführt. Auf diese Weise werden Aluminium, Eisen und ggf. Titan als Hydroxide bzw. als hydriertes Oxid ausgefällt. Mittels eines in Materialflussrichtung nachgeschalteten Partikelabscheiders 62 wird der Niederschlag entfernt. Der Partikelabscheider 62 ist beispielsweise durch einen Filter gebildet, der eine Porengröße von maximal 15 Mikrometer haben kann.

Die so entstehende Rein-Flüssigkeit 28 wird einer Solvent-Extraktionsvorrichtung 64 zugeführt, die eine Co/Ni-Solventextraktionsvorrichtung 66 umfasst. Diese umfasst eine Vielzahl an Reaktionsbehältern 38.1, 38.2, ..., die wie in Figur 2 gezeigt miteinander verbunden sind. Die Struktur einer Solvent-Extraktionsvorrichtung ist aus dem Stand der Technik bekannt und wird daher nicht näher erläutert. Es wird dadurch die manganhaltige Ziel-Flüssigkeit 32 erhalten.

Die Ziel-Flüssigkeit 32 wird einer Mangan-Solventextraktionsvorrichtung 70 zugeführt, die Ziel-Flüssigkeit 34 erzeugt.

Gemäß einer Alternative wird die manganhaltige Ziel-Flüssigkeit 32 einem zweiten Fällungsreaktor 72 zugeführt, in dem das Mangan als Manganhydroxid nach Zugabe eines Hydroxids, insbesondere eines Alkalihydroxids wie beispielsweise Natriumhydroxid, ausgefällt wird.

Gemäß einer dritten Alternative wird die manganhaltige Ziel-Flüssigkeit 32 einem Fällungsreaktor 74 zugeführt. In dem Mangan nach Zugabe eines Karbonats, insbesondere nach Zugabe von Natriumkarbonat, als Mangankarbonat ausgefällt oder abgeschieden wird.

Das Lithium wird in jeweiligen Behältern als Carbonat durch Zugabe von Natriumcarbonat oder als Phosphat durch Zugabe von Natriumphosphat ausgefällt. Es ist möglich, dass die Wiedergewinnungsanlage 36 einen Konzentrator 74 zum Entfernen von Wasser aus der Ziel-Flüssigkeit 34 aufweist, um das Ausfällen zu erleichtern.

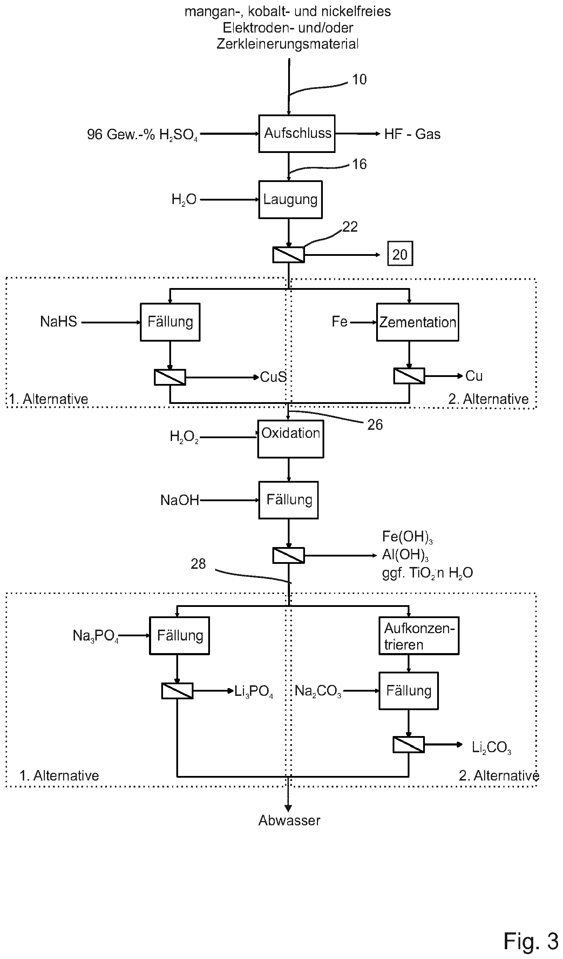

Figur 3 zeigt ein Flussdiagramm für ein erfindungsgemäßes Verfahren zum Verarbeiten von kobalt-, nickel- und manganfreiem Zerkleinerungsmaterial und/oder Elektrodenmaterial. Es ist zu erkennen, dass das Verfahren dem Verfahren gemäß Figur 1 entspricht, wobei die Schritte, die sich auf die Extraktion von Kobalt, Nickel und Mangan beziehen, entfallen.

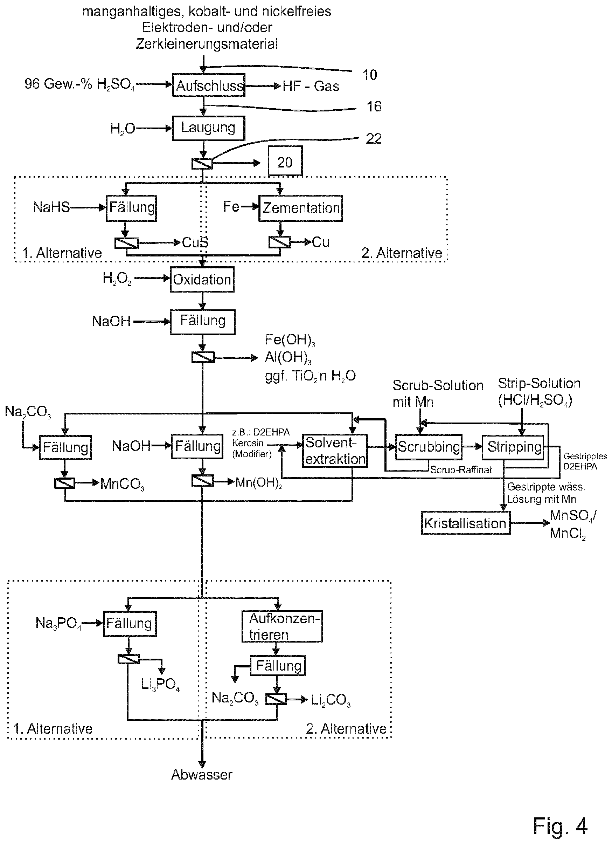

Figur 4 zeigt ein Flussdiagramm für die Verarbeitung von manganhaltigem, kobalt- und nickelfreiem Zerkleinerungsmaterial und/oder Elektrodenmaterial. Für die Extraktion von Mangan ist lediglich die Variante mit der Solvent-Extraktion eingezeichnet. Die in Figur 1 und 2 gezeigten Alternativen zur Entfernung des Mangans sind auch für das Verfahren gemäß Figur 4 möglich und stellen bevorzugte Ausführungsformen dar.

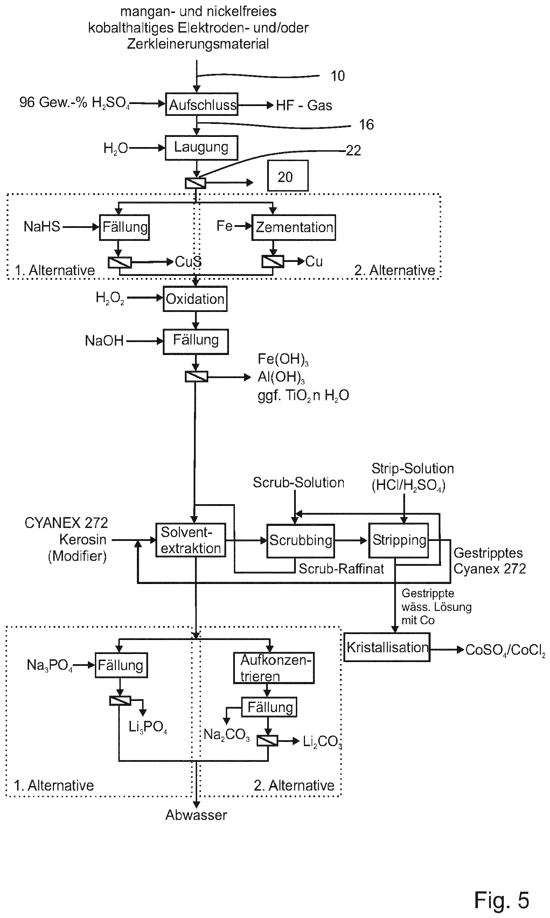

Figur 5 zeigt das Flussdiagramm eines Verfahrens zur Verarbeitung von mangan- und nickelfreiem, kobalthaltigem Elektroden- und/oder Zerkleinerungsmaterial.

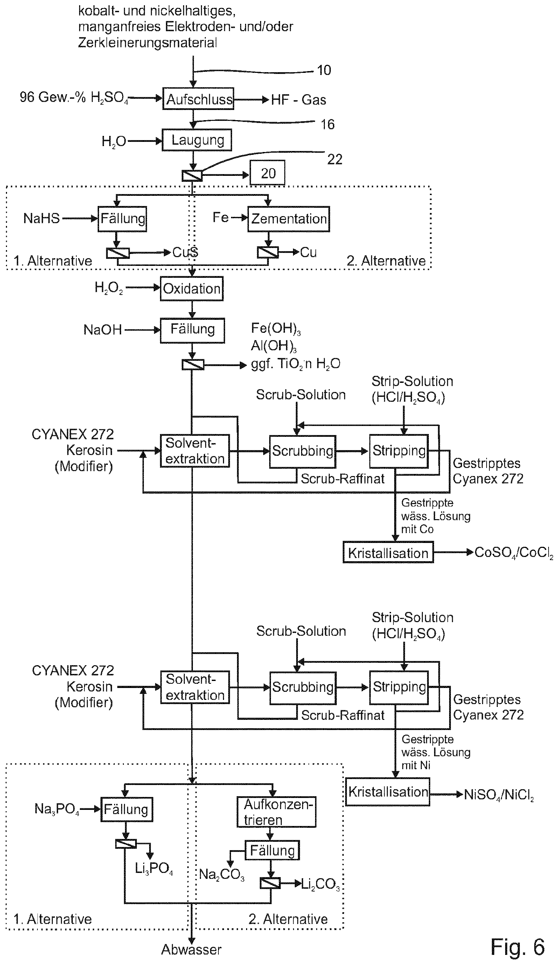

Figur 6 zeigt ein Flussdiagramm eines erfindungsgemäßen Verfahrens für kobalt- und nickelhaltiges, manganfreies Elektroden- und/oder Zerkleinerungsmaterial.

**Bezugszeichenliste**

| | | | |
|---|---|---|---|
| 10 | Zerkleinerungsgut | 60 | Behälter |
| 12 | Schwefelsäure | 62 | Partikelabscheider |
| 14 | Abgas | 64 | Solvent-Extraktionsvorrichtung |
| 15 | Fluor-Detektor | 66 | Co/Ni-Solventextraktionsvorrichtung |
| 16 | Aufschlussmaterial | | |
| 18 | Wasser | 68 | Reaktionsbehälter |
| 20 | Graphit | 70 | Mn-Solventextraktionsvorrichtung |
| 22 | Graphit-Abscheidevorrichtung | 72 | Fällungsreaktor |
| 24 | Roh-Flüssigkeit | 74 | Konzentrator |
| 26 | entkupferte Roh-Flüssigkeit | | |
| 28 | Rein-Flüssigkeit | c_{F} | Fluor-Konzentration |
| | | T_{A} | Aufschluss-Temperatur |
| 30 | Lösung | M | Materialflussrichtung |
| 32 | manganhaltige Ziel-Flüssigkeit | | |
| 34 | Ziel-Flüssigkeit | | |
| 36 | Wiedergewinnungsanlage | | |
| 38 | Elektrodenmaterial | | |
| 40 | Reaktor | | |
| 42 | Mischer | | |
| 43 | Schwefelsäure-Zuführvorrichtung | | |
| 44 | Abführvorrichtung | | |
| 46 | Laugungsvorrichtung | | |
| 48 | Graphit-Rückgewinnungsvorrichtung | | |
| 50 | Kupferextraktor | | |
| 52 | Behälter | | |
| 54 | Fällgut-Abscheider | | |
| 56 | Fe/Al/Ti-Fällgut-Abscheider | | |
| 58 | Oxidationsmittel | | |

## Patentansprüche

1. Verfahren zum Verwerten von Lithium-Batterien, mit den Schritten:
(a) Aufschließen von Zerkleinerungsgut (10), das zerkleinerte Bestandteile von Elektroden von Lithium-Batterien enthält, mit konzentrierter Schwefelsäure (12) bei einer Aufschluss-Temperatur (T_{A}) von zumindest 100°C, insbesondere zumindest 140°C, sodass Abgas (14) und ein Aufschlussmaterial (16) entstehen,
(b) Abführen des Abgases (14),
(c) nasschemisches Extrahieren zumindest eines metallischen Bestandteils des Aufschlussmaterials (16),
(d) Laugen des Aufschlussmaterials (16) und
(e) Abscheiden von Graphit (20), sodass eine Roh-Flüssigkeit (24) erhalten wird,
(f) wobei das Aufschließen so durchgeführt wird, dass Fluorbestandteile im Zerkleinerungsgut in Form von Fluorwasserstoff in das Abgas übergehen.

2. Verfahren nach Anspruch 1, **dadurch gekennzeichnet, dass** das Aufschließen so lange durchgeführt wird, bis im Aufschlussmaterial (16) eine Konzentration wasserlöslichen Fluorids (cF) unterhalb 100 mg/kg liegt, insbesondere unter 10 mg/kg.

3. Verfahren nach einem der vorstehenden Ansprüche, **dadurch gekennzeichnet, dass** die Schwefelsäure (12) beim Aufschließen mindestens stöchiometrisch eingesetzt wird.

4. Verfahren nach einem der vorstehenden Ansprüche, **gekennzeichnet durch** den Schritt: Abscheiden von Fluorwasserstoff aus dem Abgas (14).

5. Verfahren nach einem der vorstehenden Ansprüche, **gekennzeichnet durch** den Schritt:
Ausscheiden von Kupfer aus der Roh-Flüssigkeit (24), sodass entkupferte Roh-Flüssigkeit (26) entsteht.

6. Verfahren nach Anspruch 5, **gekennzeichnet durch** die Schritte:
(a) Oxidieren von Fe²⁺-Ionen in der entkupferten Roh-Flüssigkeit (26) zu Fe³⁺-Ionen, insbesondere mittels einer Sauerstoffverbindung, und
(b) Ausfällen von Eisen und/oder Aluminium und/oder Titan, insbesondere als Hydroxid, sodass eine Rein-Flüssigkeit (28) erhalten wird.

7. Verfahren nach Anspruch 6, **gekennzeichnet durch** die Schritte:
(a) Solvent-Extrahieren von Kobalt, insbesondere mittels eines Kobalt-Komplexbildners, und/oder
(b) Solvent-Extrahieren von Nickel, insbesondere mittels eines Nickel-Komplexbildners, und/oder
(c) Entfernen von Mangan, insbesondere Solvent-Extrahieren von Mangan mittels eines Mangan-Komplexbildners,
sodass eine Ziel-Flüssigkeit (34) erhalten wird.

8. Verfahren nach Anspruch 7, **gekennzeichnet durch** den Schritt:
(a) Ausfällen von Lithium aus der Ziel-Flüssigkeit (34), wenn die Rein-Flüssigkeit (28) Kobalt, Nickel und/oder Mangan enthält und
(b) Ausfällen von Lithium aus der Rein-Flüssigkeit (28), wenn die Rein-Flüssigkeit weder Kobalt noch Nickel noch Mangan enthält.

9. Verfahren nach einem der vorstehenden Ansprüche, **gekennzeichnet durch** die Schritte:
(a) Zerkleinern der Batterien, sodass Roh-Zerkleinerungsgut erhalten wird, und
(b) Inaktivieren des Roh-Zerkleinerungsguts durch Trocknen, sodass das Zerkleinerungsgut (10) erhalten wird.

10. Verfahren zum Verwerten von Lithium-Batterien, mit den Schritten:
(a) Aufschließen von Zerkleinerungsgut (10), das zerkleinerte Bestandteile von Elektroden von Lithium-Batterien enthält, mit konzentrierter Schwefelsäure (12) bei einer Aufschluss-Temperatur (T_{A}) von zumindest 100°C, insbesondere zumindest 140°C, sodass Abgas (14) und ein Aufschlussmaterial (16) entstehen,
(b) Abführen des Abgases (14) und
(c) nasschemisches Extrahieren zumindest eines metallischen Bestandteils des Aufschlussmaterials (16),
(d) wobei ein Gehalt an Fluor im Zerkleinerungsgut zumindest 0,5 Gewichtsprozent beträgt und
(e) wobei das Aufschließen so durchgeführt wird, dass Fluorbestandteile im Zerkleinerungsgut in Form von Fluorwasserstoff in das Abgas übergehen.

11. Wiedergewinnungsanlage (36) zum Verarbeiten von Lithium-Batterien, mit
(a) einem Reaktor (40), insbesondere einem beheizten Zwangsmischer oder Drehrohr, zum Aufschließen von Zerkleinerungsgut (10), das zerkleinerte Bestandteile von Elektroden der Lithium-Batterien enthält, mit konzentrierter Schwefelsäure (12) bei einer Aufschluss-Temperatur (T_{A}) von zumindest 50°C,
(b) einer Schwefelsäure-Zuführvorrichtung (43) zum Zuführen von Schwefelsäure (12) zum Zerkleinerungsgut (10),
(c) einer Abführvorrichtung (44), die angeordnet ist zum Abführen von Abgas (14) aus dem Reaktor (40), und
(d) einer Graphit-Rückgewinnungsvorrichtung (48), die
(i) eine Graphit-Abscheidevorrichtung (22), insbesondere einen Filter zum Abscheiden von Graphit (20), und
(ii) eine Auswaschvorrichtung zum Auswaschen anhaftender Laugelösung aus dem Graphit aufweist, und
(iii) die in einer Materialflussrichtung hinter dem Reaktor (40) angeordnet ist.

12. Wiedergewinnungsanlage (36) nach Anspruch 11, **gekennzeichnet durch**
(e) einen Fällgut-Abscheider (54) zum Abscheiden, insbesondere Abfiltern, von ausgefällten Cu oder Cu-Verbindungen und/oder
(f) einen Fe/Al/Ti-Fällgut-Abscheider (56) zum Abscheiden, insbesondere Abfiltern, von ausgefällten Eisen- und/oder Aluminium- und/oder Titan-Verbindungen und/oder
(g) eine Solvent-Extraktionsvorrichtung (64) zum
(i) Solvent-Extrahieren von Kobalt, insbesondere aus der Rein-Flüssigkeit (28), insbesondere mittels eines Kobalt-Komplexbildners, und/oder
(ii) Solvent-Extrahieren von Nickel, insbesondere aus der Rein-Flüssigkeit (28), insbesondere mittels eines Nickel-Komplexbildners, und/oder
(iii) Entfernen von Mangan, insbesondere aus der Rein-Flüssigkeit (28), insbesondere Solvent-Extrahieren von Mangan mittels eines Mangan-Komplexbildners,
die in Materialflussrichtung hinter der Graphit-Abscheidevorrichtung (22) angeordnet ist.

## Claims

1. A method for recycling lithium batteries, comprising the steps:
(a) digesting comminuted material (10), which contains comminuted components of electrodes of lithium batteries, with concentrated sulphuric acid (12) at a digestion temperature (T_{A}) of at least 100°C, especially at least 140°C, so that waste gas (14) and digestion material (16) are produced,
(b) discharging the waste gas (14),
(c) the wet chemical extraction of at least one metallic component of the digestion material (16),
(d) leaching the digestion material (16) and
(e) separating graphite (20) so that a raw liquid (24) is produced,
(f) the digestion being conducted in such a way that fluorine components in the comminuted material migrate into the waste gas in the form of hydrogen fluoride.

2. The method according to claim 1, **characterised in that** the digestion is carried out until a concentration of water-soluble fluoride (cF) in the digestion material is below 100 mg/kg, in particular below 10 mg/kg.

3. The method according to one of the preceding claims, **characterised in that** the sulphuric acid (12) is added at least stoichiometrically during digestion.

4. The method according to one of the preceding claims, **characterised by** the step: separating hydrogen fluoride from the waste gas (14).

5. The method according to one of the preceding claims, **characterised by** the step:
separating copper from the raw liquid (24), so that a de-copperised raw liquid (26) is produced.

6. The method according to claim 5, **characterised by** the steps:
(a) oxidising Fe²⁺ ions in the de-copperised raw liquid (26) to Fe³⁺ ions, especially using an oxygen compound, and
(b) precipitating iron and/or aluminium and/or titanium, especially as hydroxide, so that a pure liquid (28) is produced.

7. The method according to claim 6, **characterised by** the steps:
(a) solvent extraction of cobalt, particularly using a cobalt complexing agent, and/or
(b) solvent extraction of nickel, particularly using a nickel complexing agent, and/or
(c) removal of manganese, especially solvent extraction of manganese using a manganese complexing agent,
so that a target liquid (34) is produced.

8. The method according to claim 7, **characterised by** the step:
(a) precipitating lithium from the target liquid (34) when the pure liquid (28) contains cobalt, nickel and/or manganese and
(b) precipitating lithium from the pure liquid (28) when the pure liquid contains neither cobalt, nickel nor manganese.

9. The method according to one of the preceding claims, **characterised by** the steps:
(a) comminuting the batteries so that raw comminuted material is produced, and
(b) deactivating the raw comminuted material through drying, so that the comminuted material (10) is produced.

10. A method for recycling lithium batteries, comprising the steps:
(a) digesting comminuted material (10), which contains comminuted components of electrodes of lithium batteries, with concentrated sulphuric acid (12) at a digestion temperature (T_{A}) of at least 100°C, especially at least 140°C, so that waste gas (14) and digestion material (16) are produced,
(b) discharging the waste gas (14) and
(c) the wet chemical extraction of at least one metallic component of the digestion material (16),
(d) wherein a content of fluoride in the comminuted material is at least 0.5 percent by weight and
(e) the digestion being conducted in such a way that fluorine components in the comminuted material migrate into the waste gas in the form of hydrogen fluoride.

11. A recovery device (36) for processing lithium batteries with
(a) a reactor (40), especially a heated forced action mixer or a rotary kiln, for digesting comminuted material (10), which contains comminuted components of electrodes of the lithium batteries, with sulphuric acid (12) at a digestion temperature (T_{A}) of at least 50°C,
(b) a sulphuric acid supply device (43) for feeding sulphuric acid (12) to the comminuted material (10),
(c) a discharge device (44) arranged to discharge waste gas (14) from the reaction (40), and
(d) a graphite recovery device (48) comprising
(i) a graphite separation device (22), in particular a filter for separating graphite (20), and
(ii) a wash-out device for washing out adherent leaching solution from the graphite, and
(iii) arranged downstream of the reactor (40) in the direction of material flow.

12. The recovery device (36) according to claim 11, **characterised by**
(e) a precipitated material separator (54) for separating, especially filtering out, precipitated Cu or Cu compounds and/or
(f) a Fe/Al/Ti precipitated material separator (56) for separating, especially filtering out, precipitated iron and/or aluminium and/or titanium compounds and/or
(g) a solvent extraction device (64) for
(i) solvent extraction of cobalt, especially from the pure liquid (28), in particular using a cobalt complexing agent, and/or
(ii) solvent extraction of nickel, especially from the pure liquid (28), in particular using a nickel complexing agent, and/or
(iii) removal of manganese, especially from the pure liquid (28), in particular solvent extraction of manganese using a manganese complexing agent,
that is arranged downstream of the graphite separating device (22) in the direction of material flow.

## Revendications

1. Procédé de traitement de piles au lithium, comprenant les étapes consistant à :
(a) désagréger un matériau broyé (10), comprenant des composants broyés d'électrodes de piles au lithium, avec un acide sulfurique concentré (12) à une température de désagrégation (T_{A}) d'au moins 100 °C, en particulier d'au moins 140 °C, de manière à produire des gaz résiduaires (14) et un matériau désagrégé (16),
(b) évacuer les gaz résiduaires (14),
(c) extraire par voie chimique humide au moins un composant métallique du matériau désagrégé (16),
(d) lessiver le matériau désagrégé (16), et
(e) séparer du graphite (20), de manière à obtenir un liquide brut (24),
(f) la désagrégation étant mise en oeuvre de telle sorte que des composants fluorés dans le matériau broyé sont transférés dans les gaz résiduaires sous forme de fluorure d'hydrogène.

2. Procédé selon la revendication 1,
**caractérisé en ce que**
la désagrégation est mise en oeuvre jusqu'à ce que la concentration de fluorure hydrosoluble (cF) dans le matériau désagrégé (16) soit inférieure à 100 mg/kg, en particulier inférieure à 10 mg/kg.

3. Procédé selon l'une des revendications précédentes,
**caractérisé en ce que** l'acide sulfurique (12) est utilisé au moins en proportion stoechiométrique pendant la désagrégation.

4. Procédé selon l'une des revendications précédentes,
**caractérisé par** l'étape consistant à :
séparer le fluorure d'hydrogène hors des gaz résiduaires (14).

5. Procédé selon l'une des revendications précédentes,
**caractérisé par** l'étape consistant à :
séparer du cuivre hors du liquide brut (24), de manière à obtenir un liquide brut décuivré (26).

6. Procédé selon la revendication 5,
**caractérisé par** les étapes consistant à :
(a) oxyder les ions Fe²⁺ dans le liquide brut décuivré (26) pour donner des ions Fe³⁺, en particulier à l'aide d'un composé oxygéné, et
(b) précipiter du fer et/ou de l'aluminium et/ou du titane, en particulier sous forme d'hydroxyde, de manière à obtenir un liquide pur (28).

7. Procédé selon la revendication 6,
**caractérisé par** les étapes consistant à :
(a) extraire du cobalt par solvant, en particulier au moyen d'un agent complexant du cobalt, et/ou
(b) extraire du nickel par solvant, en particulier au moyen d'un agent complexant du nickel, et/ou
(c) éliminer du manganèse, en particulier extraire du manganèse par solvant au moyen d'un agent complexant du manganèse,
de manière à obtenir un liquide cible (34).

8. Procédé selon la revendication 7,
**caractérisé par** l'étape consistant à :
(a) précipiter du lithium hors du liquide cible (34) si le liquide pur (28) contient du cobalt, du nickel et/ou du manganèse, et
(b) précipiter du lithium hors du liquide pur (28) si le liquide pur ne contient ni cobalt, ni nickel, ni manganèse.

9. Procédé selon l'une des revendications précédentes,
**caractérisé par** les étapes consistant à :
(a) broyer les piles de manière à obtenir un matériau broyé brut, et
(b) inactiver le matériau broyé brut par séchage, de manière à obtenir le matériau broyé (10).

10. Procédé de traitement de piles au lithium, comprenant les étapes consistant à :
(a) désagréger un matériau broyé (10), comprenant des composants broyés d'électrodes de piles au lithium, avec un acide sulfurique concentré (12) à une température de désagrégation (T_{A}) d'au moins 100 °C, en particulier d'au moins 140 °C, de manière à produire des gaz résiduaires (14) et un matériau désagrégé (16),
(b) évacuer les gaz résiduaires (14), et
(c) extraire par voie chimique humide au moins un composant métallique du matériau désagrégé (16),
(d) une teneur en fluore dans le matériau broyé étant d'au moins 0,5 pourcent en poids, et
(e) la désagrégation étant mise en oeuvre de telle sorte que des composants fluorés dans le matériau broyé sont transférés dans les gaz résiduaires sous forme de fluorure d'hydrogène.

11. Installation de récupération (36) pour traiter des piles au lithium, comportant :
(a) un réacteur (40), en particulier un mélangeur forcé chauffé ou un tube rotatif chauffé, pour la désagrégation de matériau broyé (10), comprenant des composants broyés d'électrodes de piles au lithium, avec un acide sulfurique concentré (12) à une température de désagrégation (T_{A}) d'au moins 50 °C,
(b) un dispositif d'alimentation en acide sulfurique (43) pour l'alimentation en acide sulfurique (12) du matériau broyé (10), et
(c) un dispositif d'évacuation (44) disposé pour évacuer les gaz résiduaires (14) hors du réacteur (40), et
(d) un dispositif de récupération de graphite (48)
(i) qui comprend un dispositif de séparation de graphite (22), en particulier un filtre pour la séparation de graphite (20), et
(ii) qui comprend un dispositif de lavage pour éliminer la solution de lessivage adhérente hors du graphite, et
(iii) qui est disposé en aval du réacteur (40) dans un sens du flux de matière.

12. Installation de récupération (36) selon la revendication 11,
**caractérisée par**
(e) un séparateur de matière précipitée (54) pour séparer, en particulier par filtrage, du Cu précipité ou des composés de Cu précipités, et/ou
(f) un séparateur de matière précipitée de Fe/Al/Ti (56) pour séparer, en particulier par filtrage, des composés précipités de fer et/ou d'aluminium et/ou de titane, et/ou
(g) un dispositif (64) d'extraction par solvant pour
(i) extraire du cobalt par solvant, en particulier hors du liquide pur (28), en particulier au moyen d'un agent complexant du cobalt, et/ou
(ii) extraire du nickel par solvant, en particulier hors du liquide pur (28), en particulier au moyen d'un agent complexant du nickel, et/ou
(iii) éliminer du manganèse, en particulier hors du liquide pur (28), en particulier extraire du manganèse par solvant au moyen d'un agent complexant du manganèse,
qui est disposé en aval du dispositif de séparation de graphite (22) dans le sens du flux de matière.
